# EUROPEAN PATENT SPECIFICATION

(11) **EP 1 883 550 B1**
(45) Date of publication and mention of the grant of the patent: **24.03.2010**
(21) Application number: 06733467.2
(22) Date of filing: 04.05.2006
(51) Int. Cl.: B60J 3/02

(54) **SUN VISOR DEVICE**
SONNENBLENDENVORRICHTUNG
PARE-SOLEIL

(30) Priority: 18.05.2005 SE 0501121
(43) Date of publication of application: 06.02.2008
(73) Proprietor: Scania CV AB (PUBL), 151 87 Södertälje (SE)
(72) Inventor: JOHANSSON, Mats, S-702 12 Örebro (SE)
(74) Representative: Sjögren Paulsson, Stina
(86) International application number: PCT/SE2006/050097
(87) International publication number: WO 2006/123990

(56) References cited:
- WO-A-97/10963
- WO-A-99/14069
- WO-A1-97/10963
- CA-A1- 2 508 494
- DE-A1- 3 108 280
- DE-A1- 3 108 280
- DE-C- 521 945
- DE-C1- 3 525 149
- DE-C1- 3 525 149
- US-A- 1 840 332

## Description

The present invention relates to a sun visor device for a motor vehicle, comprising a visor element adapted to providing protection from the sun's rays at a first of the outer front seat positions in the vehicle, a spindle device adapted to extending between the first and a second outer front seat position in the vehicle and supported for rotation at at least two points close to the vehicle's windscreen, whereby the visor element is arranged on, and at one end region of, the spindle device at one end region.

Sun visor devices in motor vehicles intended to screen out, for example, low incident direct sunlight shining through the windscreen usually take the form of visor elements which are supported by a spindle running horizontally above the windscreen and are adjustable accordingly from a raised to a lowered screening position.

In a vehicle cab which is relatively wide, e.g. a truck cab, passenger bus, minibus or the like, it is difficult for the driver to lower a sun visor on the passenger side (or for a passenger to reach far enough to lower a sun visor on the driver's side in case of need) in order to screen out light shining into the cab from the right. This applies particularly to a person sitting restrained by a safety belt.

Previous known solutions to this problem comprise electrically operated roller blinds adjustable by means of a control readily accessible from the driver's position, but they have other disadvantages such as being expensive and of complicated constriction.

DE 31 08 280 A1 describe a device for protecting driver and/or front seat passenger, in particular of motor vehicles, against dazzling by the sun's rays. The device is characterised by a horizontally extending supporting and carrying rod with a sun visor which can be longitudinally displaced along the said rod and locked.

An object of the present invention is therefore to solve the above problems and at the same time to avoid the disadvantages of the state of the art.

This is achieved with a sun visor device of the type described above which at the other end region of the spindle device has a manual control means adapted to applying a rotary motion to the spindle device in order to place the visor element in at least one raised position and one screening lowered position, which control device is accessible from the second outer front seat position. The control means being a lever fastened perpendicularly to the spindle device.

In an advantageous embodiment of the invention, the spindle device is a rigid spindle.

In another advantageous embodiment of the invention, the spindle device is divided into two spindles with a transmission means between them.

In a further advantageous embodiment of the invention, the spindle device comprises a flexible spindle.

Other advantages and characteristics of the present invention are indicated more clearly by the technical description set out below of examples of embodiments with reference to the accompanying drawings, in which:
Fig. 1 depicts an advantageous first embodiment of the present invention in a perspective view.
Fig. 2 depicts an advantageous second embodiment of the present invention in a perspective view.
Fig. 3 depicts an advantageous third embodiment of the present invention in a perspective view.

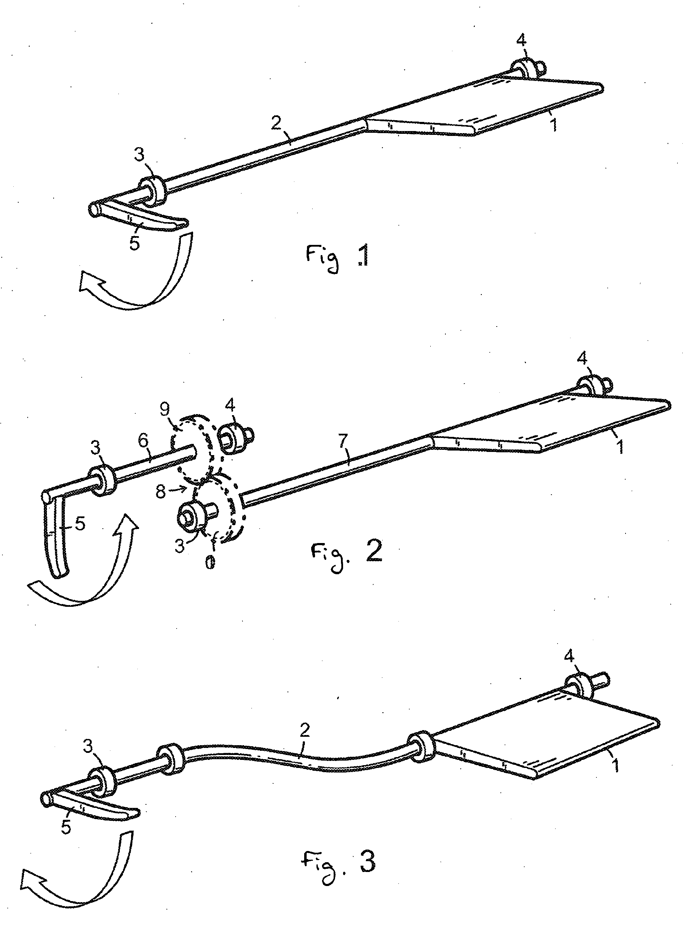

Fig. 1 depicts a sun visor device comprising a substantially planar elongate visor element 1 adapted to providing protection against the sun's rays at one of the outer front seat positions in the vehicle. The visor element 1 may be of a conventional type with a core made of, for example, plastic material, cardboard or foam material covered with an aesthetically pleasing material. The visor element 1 might also be made of a coloured transparent material which damps troublesome incident sunlight. The visor element 1 is mounted on a spindle device 2, in this embodiment in the form of a rigid spindle, arranged horizontally and supported for rotation at at least two points 3,4 close to the vehicle's windscreen. The bearing points 3, 4 are fastened to the roof panel of a tractor unit or truck and take the form of annular mountings 3, 4 with recesses for the spindle whereby the diameter of each recess is somewhat less than that of the spindle so that the mountings 3,4 hold the spindle by friction in a set rotational position against gravity forces acting upon the visor element 1. The visor element 1 has one of its long sides arranged on, and at one end region of, the spindle device 2 in such a way as to be integral with that end region. The other end region of the spindle device 2 is provided with a manual control means 5 adapted to applying a rotary motion to the spindle device 2 in order to place the visor element 1 in at least one raised position and one shading lowered position. The fact that the spindle device 2 is acted upon by friction in the mountings makes it possible to place the visor element 1 in an infinite number ofpositions between the raised and lowered positions. The friction between the mountings and the spindle device may be replaced by spring eyes (not depicted) adapted to counteracting the action of gravity on the visor element 1 and to holding in the latter in a desired position. The control means 5 in the embodiment according to Fig. 1 is a lever fastened in, and perpendicular to, the spindle device 2. The lever 5 is moved upwards to place the visor element 1 in its raised position and downwards to place the visor element 1 in its shading lowered position. The fact that the control means 5 is arranged to be accessible from the driver's side in a truck cab even when the driver is restrained by a safety belt and that the spindle device 2 extends from the driver's side to the outer passenger side where the visor element 1 is fastened to the spindle device 2 makes it easy for the driver, even when the vehicle is in motion, to adjust the position of the visor element 1 in order to avoid being dazzled by, for example, a low sun shining in obliquely via the passenger side.

Fig. 2 depicts a second embodiment of the invention with a sun visor device comprising a substantially planar elongate visor element 1 adapted to providing protection against the sun's rays at one of the outer front seat positions in the vehicle. The visor element 1 is of the same type as described above with reference to the embodiment according to Fig. 1 and is secured to a spindle device 2 which in this embodiment comprises two spindles 6, 7, whereby the first spindle 6 has a control means 5 which is fastened perpendicularly at one of its end regions and which takes the form of a lever 5 of the same type as in the first embodiment above. In its other end region the first spindle 6 is in indirect communication with the second spindle 7 via a transmission means 8. This transmission means 8 comprises in its simplest form depicted in Fig. 2 gearwheels 9,10 fastened respectively to the shafts 6, 7 and meshing with one another. Each spindle 6,7 is supported for rotation at two bearing points 3, 4 in a manner corresponding to the spindle device 2 in the above embodiment according to Fig. 1. The bearing points 3, 4 are fastened to the roof panel of a tractor unit or truck. The transmission means 8 may be of a more advanced or complicated type if so required by the application, inter alia in the form of links or articulations.

Fig. 3 depicts a third embodiment of the invention. The visor element 1 is of the same type as described above with respect to the embodiment according to Fig. 1, but in this case the spindle device 2 comprises a flexible spindle. The control means 5 is arranged, in the same way as previously, at one end of the spindle device 2, and the visor element 1 at the other end. The fact that the spindle device 2 comprises a flexible spindle means that the extensions of the axes of rotation of the control means 5 and the visor element 1 need not coincide or even be parallel, resulting in more choice about the location of, in particular, the control means 5. The spindle device 2 may be divided into regions along its length whereby a flexible central region is flanked by a rigid region on each side. Each rigid spindle region will be supported for rogation at bearing points 3,4 and be suitably fastened via them to the roof panel of a tractor unit or truck.

The visor element 1 may be provided with, for example, a mirror, lighting or other equipment

Although the invention is primarily intended to be applied to tractor units and trucks, it may also be used in other types of vehicle with a windscreen which is so long that the driver cannot reach far enough to lower a sun visor at the far end of the windscreen.

Nor is the invention limited to the examples of embodiments described above. A specialist within the technical field will find other applications within the scope of the invention in the accompanying claims.

## Claims

1. A sun visor device for a motor vehicle, comprising a visor element (1) adapted to providing protection against the sun's rays at a first of the outer front seat positions in the vehicle, a spindle device (2) adapted to extending between the first and a second outer front seat position in the vehicle and supported for rotation at at least two points (3, 4) close to the vehicle's windscreen, whereby the visor element (1) is arranged on, and at one end region of, the spindle device (2), in which the spindle device has at its other end region a manual control means (5) adapted to applying a rotary motion to the spindle device (2) for placing the visor element (1) in at least one raised position and one shading lowered position, which control means (5) is accessible from the second outer front seat position, **characterized in that** said control means (5) is a lever fastened perpendicularly to the spindle device (2).

2. A sun visor device according to claim 1, in which the spindle device (2) is a rigid spindle.

3. A sun visor device according to claim 1, in which the spindle device (2) is divided into two spindles with a transmission means (8) between them.

4. A sun visor device according to claim 1, in which the spindle device (2) comprises a flexible spindle.

## Patentansprüche

1. Sonnenblendenvorrichtung für ein Kraftfahrzeug, umfassend ein Blendenelement (1), welches für den Schutz gegen Sonnenstrahlen an einer ersten der äußeren Vordersitzpositionen in einem Fahrzeug vorgesehen ist, eine Spindeleinrichtung (2), welche sich zwischen der ersten und einer zweiten äußeren Vordersitzposition im Fahrzeug erstreckt und welche an mindestens zwei Punkten (3, 4) in der Nähe von der Windschutzscheibe des Fahrzeugs drehbar gelagert ist, wobei das Blendenelement (1) an der und an einem Endbereich der Spindeleinrichtung (2) angeordnet ist, wobei die Spindeleinrichtung an ihrem anderen Endbereich ein manuelles Steuermittel (5) aufweist, welches zum Ausüben einer Drehbewegung auf die Spindeleinrichtung (2) vorgesehen ist, um das Blendenelement (1) in wenigstens einer angehobenen Position und in einer abdunkelnden abgesenkten Position zu positionieren, welches Steuermittel (5) von der zweiten äußeren Vordersitzposition zugänglich ist,
**dadurch gekennzeichnet, dass** das Steuermittel (5) ein Hebel ist, welcher senkrecht zu der Spindeleinrichtung (2) befestigt ist.

2. Sonnenblendenvorrichtung nach Anspruch 1, bei welcher die Spindeleinrichtung (2) eine starre Spindel ist.

3. Sonnenblendenvorrichtung nach Anspruch 1, bei welcher die Spindeleinrichtung (2) in zwei Spindeln mit einem Getriebe (8) dazwischen unterteilt ist.

4. Sonnenblendenvorrichtung nach Anspruch 1, bei welcher die Spindeleinrichtung (2) eine flexible Spindel umfasst.

## Revendications

1. Dispositif pare-soleil pour véhicule à moteur, comprenant un élément à visière (1) adapté pour protéger des rayons du soleil au niveau d'une première position extérieure des sièges avant dans le véhicule, un dispositif à tige (2) adapté pour s'étendre entre la première et la seconde position extérieure des sièges avant dans le véhicule et soutenu pour sa rotation au niveau de deux points (3, 4) au moins à proximité du pare-brise du véhicule, l'élément à visière (1) étant disposé sur et dans une zone d'extrémité du dispositif à tige (2), dans lequel le dispositif à tige comporte, dans son autre zone d'extrémité un moyen de commande manuelle (5) adapté pour appliquer un mouvement de rotation au dispositif à tige (2) afin de placer l'élément à visière (1) dans au moins une position relevée et une position baissée procurant de l'ombre, lequel moyen de commande (5) est accessible depuis la deuxième position extérieure des sièges avant, **caractérisé en ce que** ledit moyen de commande (5) est un levier fixé perpendiculairement au dispositif à tige (2).

2. Dispositif pare-soleil selon la revendication 1, dans lequel le dispositif à tige (2) est une tige rigide.

3. Dispositif pare-soleil selon la revendication 1, dans lequel le dispositif à tige (2) est divisé en deux tiges reliées entre elles par un moyen de transmission (8).

4. Dispositif pare-soleil selon la revendication 1, dans lequel le dispositif à tige (2) comprend une tige souple.
